# EUROPEAN PATENT SPECIFICATION

(11) **EP 1 216 520 B1**
(45) Date of publication and mention of the grant of the patent: **09.11.2005**
(21) Application number: 00959726.1
(22) Date of filing: 31.08.2000
(51) Int. Cl.: H04B 7/00, H04Q 7/00, H04B 7/005

(54) **TRANSMIT POWER CONTROL METHOD AND APPARATUS**
VERFAHREN UND VORRICHTUNG ZUR SENDELEISTUNGSSTEUERUNG
PROCEDE ET APPAREIL DE COMMANDE DE PUISSANCE D'EMISSION

(30) Priority: 17.09.1999 US 397835
(43) Date of publication of application: 26.06.2002
(73) Proprietor: MOTOROLA, INC., Schaumburg, IL 60196 (US)
(72) Inventor: PECEN, Mark, Edward, Rolling Meadows, IL 60008 (US); DORSEY, Donald, Arthur, Vernon Hills, IL 60061 (US)
(74) Representative: Openshaw, Paul Malcolm
(86) International application number: PCT/US2000/024020
(87) International publication number: WO 2001/020805

(56) References cited:
- US-A- 5 579 373
- US-A- 5 758 090
- US-A- 6 101 176
- US-A- 6 137 840

## Description

### Related Field of the Invention

Present invention relates to the field of communication systems, and more particularly, transmit power control techniques in a communication system.

### Background of the Invention

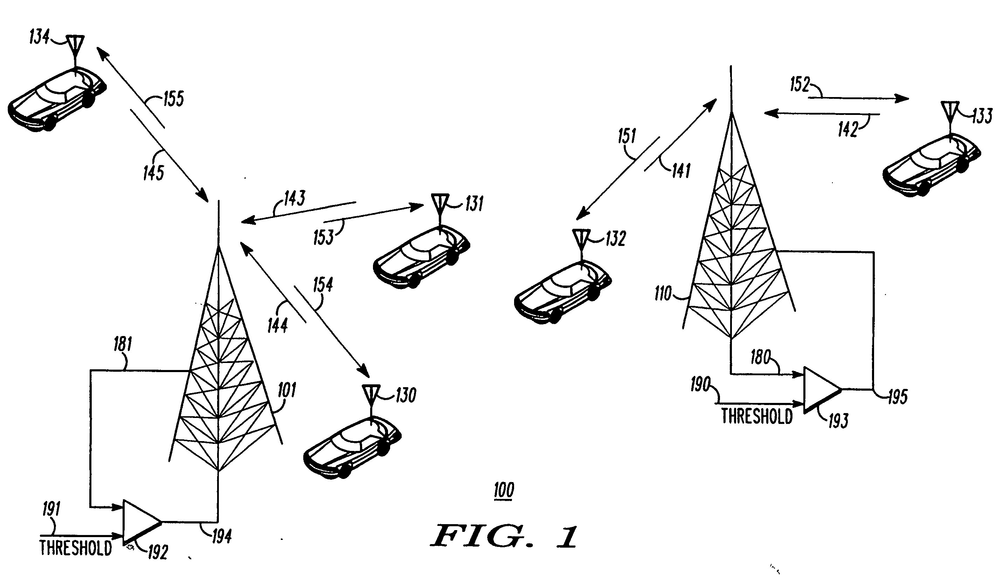

A frequency planning among closely located base stations in a communication system may be used such that the co-channel interference is minimized. For example, referring to FIG. 1, a base station 110 according to a frequency planning tries not to transmit at the same time on the same frequency as a base station 101 is transmitting. Such frequency planning minimizes co-channel interference. As such, for example, mobile stations 131 and 132 each communicating with different base stations experience minimal co-channel interference, however, co-channel interference is not entirely eliminated when base stations are not time synchronized. Two closely located base stations may for short period of time transmit on the same frequency.

To further minimize co-channel interference, in addition to a frequency planning, each base station utilizes a power control scheme to minimize transmission of signals thus limiting the power level. The level of interference on an RF channel normally is associated with the sum of the contributions from multiple RF transmitting sources. As such, controlling RF power level minimizes the amount of the signal power level on a radio link to a level needed for an adequate communication quality. Power control in effect reduces the average amount of RF spectral energy surrounding the mobile and base stations, thus reducing the level of interference. The power control scheme may be implemented on downlink signals, transmitted from the base stations to the mobile stations, and uplink signals, transmitted from the mobile stations to the base stations. Power control of radio frequency signals transmitted from different sources in a communication system in different forms are known. The concept of power control is normally based on a feedback system. In particular, the specification for Global System Mobiles (GSM) communication system describes a method for controlling power level of downlink signals. The Global System for Mobile Communications (GSM) utilizes power control of mobile and base stations. Referring to FIG. 1, a communication system 100 employing a form of power control technique is shown. Such power control scheme may be according to the GSM standards. The communication system 100 may include one or more base stations such as base stations 101 and 110, each working independently providing communication services to a number of mobile stations, such as mobile stations 130-34. At different times, the number of mobile stations located in a geographic area receiving communication services may vary, although in this example only five mobile stations are shown. The communication services may be provided according to a commonly known method of communication such as Time Division Multiple Access (TDMA) as described in the specification for the GSM system. Each mobile station communicates with a base station through down and uplink signals. The uplink signals 141-45 have respectively associated downlink signals 151-55.

For downlink RF power control, a base station receives from each mobile station, in communication with the base station, information or a report about quality of the signals received at each mobile station. Such information may include a quality of signal indicator and downlink signal power level received at each mobile station. For example, the information received at 180 and 181 are compared to thresholds 190 and 191 by comaprators 193 and 192 respectively at base stations 110 and 101. Based on the comparison, downlink signal power level associated with the mobile station that reported the information is increased or decreased accordingly. Each downlink signal normally is controlled independently. The GSM specifications also define a power control for uplink RF signals which is dependent on the power output class of the mobile stations.

In GPRS mode, a GSM system may include at least one broadcast control channel (BCCH) and a number of downlink physical data channels (PDCH) providing communication services to the mobile stations. The BCCH is broadcast at fixed power level for all mobile stations in the coverage area. As such, the BCCH channel normally is transmitted at the maximum power level allowable by the base station. The downlink power on the PDCH is limited by the GSM specifications to 10 dB below a certain reference level, commonly referred to "P0" level. The information regarding P0 is sent to the mobile stations in an assignment message. The base station after sending the value of P0 to a mobile station, should ensure that the downlink PDCH intended for that mobile station is transmitted at a power level between a range of power levels defined by a maximum and minimum power levels. The maximum and minimum power levels are calculated respectively according to (BCCH carrier level - P0) and (BCCH carrier level - P0 - 10 dB). The P0 value is used until the temporary block flow (TBF) in which the assignment message refers terminates or another assignment message is sent to the mobile station which re-assigns the value of P0. Depending on the downlink signal propagation condition between the base station and the mobile station, a new TBF message may be sent to the mobile station to correct for differences in the signal propagation at different times. The P0 parameter allows the mobile stations with limited received signal dynamic range some advance knowledge of how to set their receiver automatic gain control preventing a receiver signal over load. The following graph represent the maximum and minimum power level of a downlink signal received at a mobile station for a P0 value with respect to the free space distance between the mobile station and a base station.

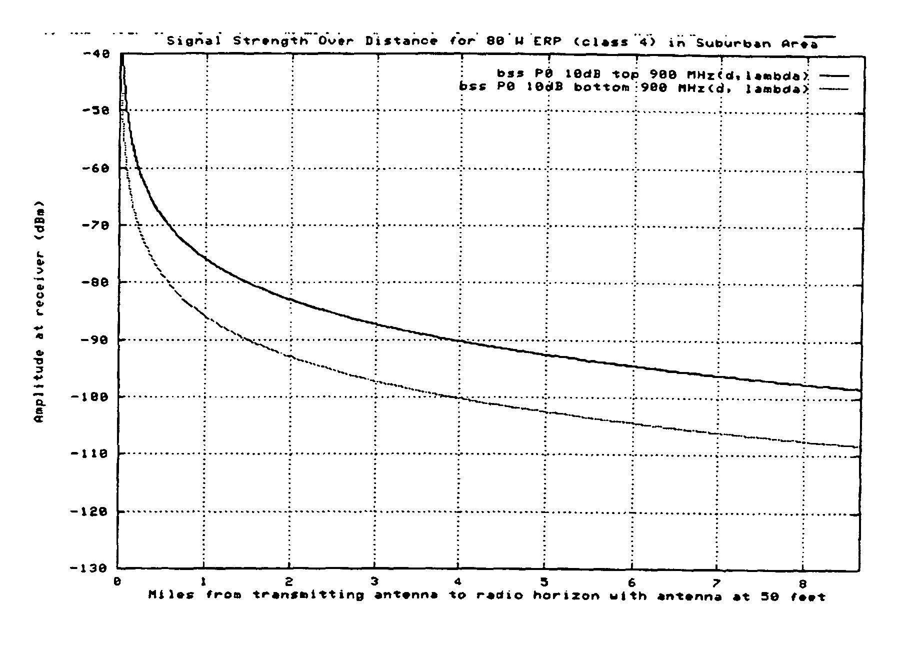

The range of signals received at the mobile stations close to the base station, for example, 1 mile away in free space, is between -75 to -85 dBm. For a mobile station at 7 miles away, for example, the range is between -95 to -105 dBm. Therefore, for a mobile station at 7 miles away in free space, the P0 value must be different than for a mobile station at 1 mile away in free space. Environmental conditions at different areas drastically changes the propagation path loss characteristics such that two mobile stations close to the base station may require two different P0 values. The value of P0 parameter is determined according to the signal quality received at the base station. The TBF assignment message is used to change P0 value when signal quality drops below a threshold.

The communication services provided by a communication system, such as communication system 100, may include communication of voice and data services. The Global Packet Radio Services (GPRS) is a feature of the GSM system for the purpose of communicating data, i.e. non-voice, between mobile stations and base stations. The standards for communicating data are according to a form of packet switched communication as explained in the GSM standards, a copy of the specification may be obtained by contacting *ETSI, F-06921 Sophia Antipolis Cedex -FRANCE*, or accessing the web site *www.etsi.org* on the internet. An important part of GPRS standard may include providing communication of data service to more than one mobile stations in GPRS mode. For example, base station 101 may be in GPRS mode communication with mobile stations 130 and 131. When communication with a mobile station is in GPRS mode, i.e. packet switched mode, the base station may transmit data to the mobile station on a few time slots until data transfer is completed.

To begin a data transfer via packet data switching in GPRS mode, the mobile station and base station go through a series of setup sequences exchanging necessary information for data transfer to begin. Once the data transfer is completed, the mobile station and base station go through a teardown sequence to terminate the data transfer. During the data transfer period, the base station may transmit data to the mobile station on a downlink signal on a series of time slots which were previously assigned by the base station and communicated to the mobile station. In another way, the base station may dynamically allocate a series of time slots on the downlink to transfer an entire block of data to the mobile station. There may be more than one block of data to be transmitted during the data transfer period. Each block of data is interleaved across four TDMA frames with a portion of the data sent on one time slot in each of the four frames. The time slots in dynamic allocation mode are selected from a series of time slots predefined according to the mobile station "multi-slot-class" information communicated between the base station and mobile station.

Each mobile station normally after a setup sequence monitors the time slots defined by the base station. The slots are selected from the mobile station multi-slot-class. Two or more mobile stations may have multi-slot-classes that are either the same or share at least one common time slot. As a result, two or more mobile stations may be monitoring the same time slots for receiving downlink information. For example, there may be at least 29 different multi slot classes. A mobile station belonging for example to a multi slot class 24 may be required to monitor all time slots from the first time slot to the 8^{th} time slot in a time frame consisting of essentially 8 time slots. A mobile station belonging, for example, to multi slot class 3, may be required to monitor all time slots from the first time slot to the second time slot. Mobile stations in communication with a base station normally operate according to a time synchronization as defined by the base station. Therefore, two or more mobile stations in communication with the same base station may be monitoring the same time slot for detecting and receiving downlink information. The data is tagged such that it identifies the intended mobile.station.

In dynamic allocation mode, a block of data may be transferred to a mobile station over four time slots in four consecutive TDMA frames. The downlink signal at each time slot selected for transmission of a block of data is required to have the same power level. Thus, all four time slots selected for transmission of a block of data intended for a mobile station are transmitted at the same power level.

Data in each time slot may have at least two data fields. The first field may contain uplink status flag (USF) followed by a data field containing data of the block of data. Each mobile station has a unique identification associated with the data bits in the USF field. To give an immediate uplink access to a mobile station, the base station places the USF identity of a mobile station in the USF field to give that mobile station an immediate access to an uplink time slots. If the value of the USF bits is the same as the value assigned to a mobile station, the mobile station after detecting the USF bits may transmit on uplink on the same time slot of the next frame that received the USF filed. The mobile station decides whether to transmit according to the allowed time slots. The mobile station identified by the USF field may be different than the mobile station that the data field is intended. The mobile stations with common multi-slot-class monitoring all time slots in the class makes possible that the USF field be intended for one mobile station and data field for another in one time downlink time slot.

The environment through which the downlink signals propagates may be entirely different for each mobile station. Mobile stations, although close in proximity, may receive signals transmitted from a base station at entirely different power levels because, for example, an obstacle such as a building hides one mobile station line of sight. Such mobile stations while monitoring the time slots as defined by their multi-slot-class may require different downlink signal power levels. When the downlink signal is transmitted to a mobile station, the power control feedback loop may set the power level necessary for adequate reception at the intended mobile station. As such, the P0 value set for a mobile station intended to receive the USF field data may be different than the P0 value of another mobile station that the data field in intended.

In GPRS mode, all mobile stations with multi-slot-classes that share at least one common time slot may require different power levels for adequate reception. Since such mobile stations are required to monitor all time slots defined in their multi-slot-class for detection of USF field data or data field data, some mobile stations may experience difficulty detecting the data transmitted during such time slots. Some mobile stations depending on their locations or carrier to inference level with different downlink power level requirements may experience difficulty detecting the USF data that are tagged along with the data intended for another mobile station.

Therefore, there is a need for a power control scheme applied over the downlink signals such that USF data intended for one mobile station and data field data intended for another mobile station are adequately received at both mobile stations.

US 5,579,373 discloses a transmission power control method in a cellular radiotelephone system, in which a base station receives uplink signals transmitted by each mobile station and creates uplink transmission groups based on the received uplink signals.

According to a first aspect of the invention, there is provided a power control method as claimed in claim 1.

According to a further aspect of the invention, there is provided a power control apparatus as claimed in claim 5.

Further aspects are as claimed in the dependent claims.

### Brief Description of the Drawings

FIG. 1 depicts a communication system 100 employing a power control scheme for downlink signals transmitted to mobile stations.

### Detailed Description of the Preferred Embodiment(s)

According to various aspects of the invention, in a communication system, a method may include grouping a plurality of mobile stations into a plurality of groups of mobile stations, and assigning a power control range to each group of the plurality of groups of mobile stations, thereby, creating a plurality of power control ranges corresponding to the plurality of groups of mobile stations. Each power control range has a minimum and maximum power level. As such, in GPRS mode, all mobile stations with multi-slot-classes that share at least one common time slot and are located in proximity of each other with similar downlink power control requirement may be assigned a power control range for adequate downlink signal reception. The mobile stations grouped in one group are required to monitor all time slots defined in their multi-slot-class for detection of data in the USF field or data field. The mobile stations grouped in one group each having a multi-slot class that shares at least one time slot may not experience difficulty detecting the data or the USF data transmitted during such time slots. According to an aspect of the invention, at least a downlink signal transmitted from a base station to at least one of the plurality of mobile stations is controlled according to one of the plurality of power control ranges corresponding to one of the plurality of groups of mobile stations that includes the least one of the plurality of mobile stations.

The assignment of power control range may be based on determining location of at least one of the plurality of groups of mobile stations with respect to a base station providing communication services to the plurality of groups of mobile stations. The assignment may include alternatively or additionally based on the downlink signals reception quality at the plurality of the mobile stations. The grouping may be based on determining location of at least one of the plurality of mobile stations with respect to a base station providing communication services to the plurality of mobile stations.

The assignment of power control range may include assigning a power level reference value, such P0, to each of the plurality of power control ranges. Furthermore, a base station may communicate the plurality of power control ranges to corresponding plurality of groups of mobile stations. Such communication may include communicating the assigned power reference value to the mobile stations in each group.

Various aspect of the invention may be more apparent in the following diagram.

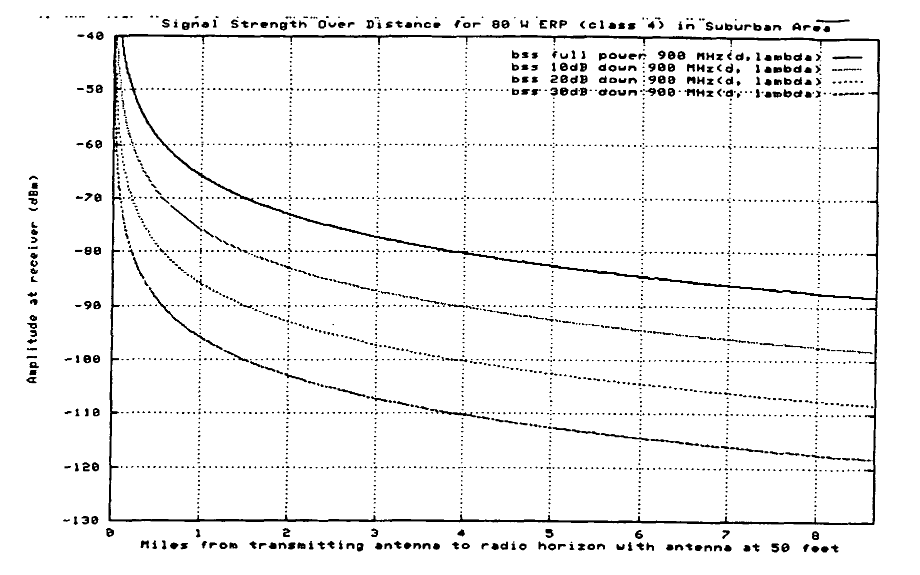

For example, depending on the distance of the mobile station from the base station a different power control range may be assigned. For the mobile stations located at about 4-8 miles from the base station, the power control range may be limited to a power control range limited by the solid line shown in the above diagram and a lower value. For the mobile stations located between 1.5 to 4 miles from the base station, the power control range may be limited to a power control range limited by the dotted line below the solid line shown in the above diagram and a lower value. Similarly for other mobile stations. An application, filed with USPTO as US 09/229144 now granted as US 6603825 Titled: Automatic Gain Control for a Receiver and Method Therefor, having at least a common named inventor with the present application, assigned to Motorola Inc., the assignee of the present application, discloses power control techniques for GPRS mode in a GSM communication system, in particular Figure 11 of this reference shows four zones. Each zone has a maximum and minimum power levels assigned to a group of mobile stations. The zones as shown are selected according to distance of the mobile station from the base station.

The power control range may be viewed as zones of power control. Such zones may be dynamic, such that power control ranges change depending on the communication system condition. Some hysteresis between zones may be created to eliminate rapid reassignment of zones to mobile stations. A mobile station may be acceptable to be grouped into more than one zone. Power control ranges, i.e. zones may be adaptive in the event that much of the GPRS traffic is prevalent in an area. Some groups of mobile stations in GPRS mode may be within a certain distance from the base station antenna. In the case of areas of high population density using GPRS services, a zone may be dynamically created to absorb the high population density.

As the GPRS traffic is increased on the system, the problems with having to manage the transmit power level such that the downlink signal is suitable for more than one mobile station in which at least one mobile station is at a vastly differing distance from the base station antenna are greatly reduced.

A software algorithm or hardware in the base station implements the zoning of downlink power control range by dynamically creating and eliminating the power control zones, i.e. power control ranges. Another algorithm implements assignment to a mobile station a new zone when the mobile station crosses the boundary from one zone to another. The power control zones based upon carrier-to-interference and received power levels reported by the mobile station are of a logical nature, and may or may not be directly related to the distance between mobile and base station. Nevertheless, there may be exceptions to the path loss characteristics being a strict function of distance between mobile and base station antennas. There may exist conditions in which a mobile station is located near a base station antenna, but located inside a structure having a high amount of RF signal absorption. The timing advance of the communication between the base station and such closely located mobile station may indicate that the mobile station is nearby, but the carrier-to-interference and received power information reported by the mobile would cause the base station to assign the mobile to a zone which may contain other mobiles which are much farther away, but logically within the same power control zone or range.

The algorithm for managing power control zones may be described in terms of a simplified representation of the GSM base station components and the mobile stations. The signaling plane between mobile station and base station may be with base station zoning logic. Upon receipt of an access burst from a mobile station, which arrives at the base station subsystem via one of the base station transceivers, the base station processes the request by the mobile station to start an uplink or downlink TBF. When the base station is ready to grant the assignment to the mobile, the zoning logic searches a table or list of existing zones and tries to find one that is appropriate for the mobile station based on the mobile station's carrier-to- interference ratio and reported received power level as sent by the mobile in the last Signal Quality Report, or in addition or alternatively based on the location of the mobile station. If no such zone exists, then a logical zone is created in which the optimal carrier-to-interference ratio would be achieved using the minimum of power on the downlink signal. The mobile station would then be informed of its channel, and, directly or indirectly, its zone assignment in the assignment message by way of, for example, communication of a P0 value. The mobile stations are not required to have any specially designed software or hardware to operate according to various aspects of the invention.

When the base station receives the Channel Quality Report from a mobile station, the logic which is activated to decode such report in turn activates the zoning logic, which first determines whether the carrier-to-interference ratio is appropriate for the zone in which the mobile station is located or the C/I information of the mobile station downlink signal. The algorithm terminates and no re-assignment of zone or power control range may occur at optimal level at which increasing the downlink power would not result in better decoder performance. At such an optimal level, 100% of the transmitted signal would be received at this power level.

If the mobile station is assigned to a zone, but its carrier-to-interference ratio is inappropriate for that zone, (i.e., either higher than optimal or too low), then the zoning logic searches a table or list of existing zones and tries to find one that is appropriate for the mobile based on the mobile station's carrier-to-interference ratio and reported received power level. If no such zone exists, then a logical zone is created in which the optimal carrier-to-interference ratio would be achieved using the minimum of base station power on the downlink signal. Power control ranges or zones may be dissolved when they are no longer needed. After a TBF ends, the base station removes the mobile station from the existing zone table or list entry. If the mobile station being removed is the last mobile station in the zone, the zone may be dissolved.

Other communication systems as defined by Enhanced Data for Global Evolution (EDGE) or Enhanced GPRS operate according to similar standards. The present invention may be used in all or any variations of the mentioned data communication systems.

## Claims

1. A power control method comprising:
grouping a plurality of mobile stations into a plurality of groups of mobile stations based on a downlink signal reception quality;
assigning a downlink power control range to each group of said plurality of groups of mobile stations, thereby creating a plurality of downlink power control ranges corresponding to said plurality of groups of mobile stations, wherein each power control has a minimum and maximum power level; and
controlling at least a downlink signal transmitted from a base station to at least one of said plurality of mobile stations according to one of said plurality of power control ranges corresponding to one of said plurality of groups of mobile stations that includes said least one of said plurality of mobile stations.

2. The method as recited in claim 1 wherein said downlink signal includes a time slot having at least a first and second data fields, wherein said first data field is intended for a first mobile station and second data field for a second mobile station, wherein said first and second mobile stations are included in one of said plurality of groups of mobile stations.

3. The method as recited in claim 1 wherein said assigning is based on determining the location of at least one of said plurality of mobile stations with respect to a base station providing communication services to said plurality of groups of mobile stations.

4. The method as recited in claim 1 wherein said grouping is based on determining the location of at least one of said plurality of mobile stations with respect to a base station providing communication services to said plurality of mobile stations.

5. A power control apparatus, comprising:
means for grouping a plurality of mobile stations into a plurality of groups of mobile stations based on a downlink signal reception quality;
means for assigning a downlink power control range to each group of said plurality of groups of mobile stations, thereby creating a plurality of downlink power control ranges corresponding to said plurality of groups of mobile stations, wherein each power control has a minimum and maximum power level
means for controlling at least a downlink signal transmitted from a base station to at least one of said plurality of mobile stations according to one of said plurality of power control ranges corresponding to one of said plurality of groups of mobile stations that includes said least one of said plurality of mobile stations.

6. The apparatus as recited in claim 5 further comprising means for determining location, for said means for assigning, of at least one of said plurality of groups of mobile stations with respect to a base station providing communication services to said plurality of groups of mobile stations.

7. The apparatus as recited in claim 5 further comprising means for determining location, for said means for grouping, of at least one of said plurality of mobile stations with respect to a base station providing communication services to said plurality of mobile stations.

8. The apparatus as recited in claim 5 further comprising means for assigning a power level reference value to each of said plurality of power control ranges.

## Patentansprüche

1. Verfahren zur Leistungssteuerung, das umfasst:
Gruppieren einer Mehrzahl von Mobilstationen in eine Mehrzahl von Gruppen von Mobilstationen, basierend auf einer Downlink-Signalempfangsqualität;
Zuweisen eines Downlink-Leistungssteuerungsbereiches zu jeder Gruppe der Mehrzahl der Gruppen der Mobilstationen, wodurch eine Mehrzahl von Downlink-Leistungssteuerungsbereichen erzeugt wird, entsprechend der Mehrzahl der Gruppen der Mobilstationen, wobei jede Leistungssteuerung über einen minimalen und maximalen Leistungspegel verfügt; und
Steuern mindestens eines Downlink-Signals von einer Basisstation an mindestens eine der Mehrzahl der Mobilstationen, gemäß einem der Mehrzahl der Leistungssteuerbereiche, entsprechend einer der Mehrzahl der Gruppen der Mobilstationen, die die mindestens eine der Mehrzahl der Mobilstationen umfasst.

2. Verfahren gemäß Anspruch 1, wobei das Downlink-Signal einen Zeitschlitz umfasst, der über mindestens ein erstes und zweites Datenfeld verfügt, wobei das erste Datenfeld für eine erste Mobilstation und das zweite Datenfeld für eine zweite Mobilstation vorgesehen ist, wobei die erste und zweite Mobilstation in einer der Mehrzahl der Gruppen von Mobilstationen enthalten sind.

3. Verfahren gemäß Anspruch 1, wobei das Zuweisen auf einem Bestimmen des Standortes mindestens einer der Mehrzahl der Mobilstationen bezüglich einer Basisstation, die der Mehrzahl der Gruppen von Mobilstationen Kommunikationsdienste zur Verfügung stellt, basiert.

4. Verfahren gemäß Anspruch 1, wobei das Gruppieren auf einem Bestimmen des Standortes von mindestens einer der Mehrzahl der Mobilstationen bezüglich einer Basisstation basiert, die der Mehrzahl der Mobilstationen Kommunikationsdienste zur Verfügung stellt, basiert.

5. Leistungssteuerungsvorrichtung, die umfasst:
Mittel zum Gruppieren einer Mehrzahl von Mobilstationen in eine Mehrzahl von Gruppen von Mohilstationen, basierend auf einer Downlink-Signalempfangsqualität;
Mittel zum Zuweisen eines Downlink-Leistungssteuerungsbereiches zu jeder Gruppe der Mehrzahl von Gruppen der Mobilstationen, wodurch eine Mehrzahl von Downlink-Leistungssteuerungsbereichen erzeugt wird, entsprechend der Mehrzahl der Gruppen der Mobilstationen, wobei jede Leistungssteuerung über einen minimalen und maximalen Leistungspegel verfügt;
Mittel zum Steuern mindestens eines Downlink-Signals von einer Basisstation an mindestens eine der Mehrzahl der Mobilstationen, gemäß einem der Mehrzahl der Leistungssteuerbereiche, entsprechend einer der Mehrzahl der Gruppen der Mobilstationen, die die mindestens eine der Mehrzahl der Mobilstationen umfasst.

6. Vorrichtung gemäß Anspruch 5, die weiterhin Mittel zum Bestimmen des Standortes, für die Mittel zum Zuweisen, mindestens einer der Mehrzahl der Gruppen der Mobilstationen bezüglich einer Basisstation, die der Mehrzahl der Gruppen von Mobilstationen Kommunikationsdienste zur Verfügung stellt, umfasst.

7. Vorrichtung gemäß Anspruch 5, die weiterhin Mittel zum Bestimmen des Standortes, für die Mittel zum Gruppieren, mindestens einer der Mehrzahl der Mobilstationen bezüglich einer Basisstation, die der Mehrzahl der Mobilstationen Kommunikationsdienste zur Verfügung stellt, umfasst.

8. Vorrichtung gemäß Anspruch 5, die weiterhin Mittel zum Zuweisen eines Leistungspegelreferenzwertes zu jedem der Mehrzahl der Leistungssteuerbereiche umfasst.

## Revendications

1. Procédé de commande de puissance, comprenant les opérations suivantes :
regrouper une pluralité de postes mobiles en une pluralité de groupes de postes mobiles sur la base de la qualité de réception du signal descendant ;
affecter un intervalle de commande de puissance de signal descendant à chaque groupe de ladite pluralité de groupes de postes mobiles, de manière à ainsi créer une pluralité d'intervalles de commande de puissance de signal descendant correspondant à ladite pluralité de groupes de postes mobiles, où chaque commande de puissance possède un niveau de puissance minimal et un niveau de puissance maximal ; et
commander au moins un signal descendant émis depuis une station de base à destination d'au moins un poste mobile de ladite pluralité de postes mobiles selon un intervalle de ladite pluralité d'intervalles de commande de puissance correspondant à un groupe de ladite pluralité de groupes de postes mobiles qui comporte ledit au moins un poste de ladite pluralité de postes mobiles.

2. Procédé selon la revendication 1, où ledit signal descendant comporte une tranche de temps qui possède au moins des premier et deuxième champs de données, où ledit premier champ de données est destiné à un premier poste mobile et ledit deuxième champ de données est destiné à un deuxième poste mobile, où lesdits premier et deuxième postes mobiles sont inclus dans un groupe de ladite pluralité de groupes de postes mobiles.

3. Procédé selon la revendication 1, où ladite opération d'affectation est basée sur la détermination de l'emplacement d'au moins un poste mobile de ladite pluralité de postes mobiles par rapport à une station de base fournissant des services de télécommunications à ladite pluralité de groupes de postes mobiles.

4. Procédé selon la revendication 1, où ledit regroupement est basé sur la détermination de l'emplacement d'au moins un poste mobile de ladite pluralité de postes mobiles par rapport à une station de base fournissant des services de télécommunications à ladite pluralité de postes mobiles.

5. Appareil de commande de puissance, comprenant :
un moyen servant à regrouper une pluralité de postes mobiles en une pluralité de groupes de postes mobiles sur la base de la qualité de réception du signal descendant ;
un moyen servant à affecter un intervalle de commande de puissance de signal descendant à chaque groupe de ladite pluralité de groupes de postes mobiles, de manière à créer une pluralité d'Intervalles de commande de puissance de signal descendant correspondant à ladite pluralité de groupes de postes mobiles, où chaque commande de puissance possède un niveau de puissance minimal et un niveau de puissance maximal,
un moyen servant à commander au moins un signal descendant émis depuis une station de base à destination d'au moins un poste mobile de ladite pluralité de postes mobiles en fonction d'un Intervalle de ladite pluralité d'intervalles de commande de puissance correspondant à un groupe de ladite pluralité de groupes de postes mobiles qui comporte ledit au moins un poste de ladite pluralité de postes mobiles.

6. Appareil selon la revendication 5, comprenant en outre un moyen qui sert à déterminer l'emplacement, relativement audit moyen d'affectation, d'au moins un groupe de ladite pluralité de groupes de postes mobiles par rapport à une station de base fournissant des services de télécommunications à ladite pluralité de groupes de postes mobiles.

7. Appareil selon la revendication 5, comprenant en outre un moyen qui sert à déterminer l'emplacement, relativement audit moyen de regroupement, d'au moins un poste mobile de ladite pluralité de postes mobiles par rapport à une station de base fournissant des services de télécommunications à ladite pluralité de postes mobiles.

8. Appareil selon la revendication 5, comprenant en outre un moyen qui sert à affecter une valeur de référence de niveau de puissance à chaque intervalle de ladite pluralité d'intervalles de commande de puissance.
